(19) **Europäisches Patentamt European Patent Office Office européen des brevets**

(11) **EP 3 855 252 B1**

(12) **EUROPEAN PATENT SPECIFICATION**

(45) Date of publication and mention of the grant of the patent:
**18.05.2022 Bulletin 2022/20**

(21) Application number: **20189766.7**

(22) Date of filing: **06.08.2020**

(51) International Patent Classification (IPC):
**G01N 21/41** *(2006.01)* **G01N 21/47** *(2006.01)*
**G01N 15/14** *(2006.01)*

(52) Cooperative Patent Classification (CPC):
**G01N 21/41; G01N 15/1475; G01N 21/4788;**
**G01N 21/4795; G02B 21/367; G02B 27/50;**
G01N 2015/0046; G01N 2015/1006;
G01N 2021/1787; G01N 2021/4173;
G01N 2201/0675

(54) **METHOD AND APPARATUS FOR THE PHASE RETRIEVAL AND VOLUMETRIC IMAGING RECONSTRUCTION**

VERFAHREN UND VORRICHTUNG ZUR PHASENRÜCKGEWINNUNG UND VOLUMETRISCHEN BILDREKONSTRUKTION

PROCÉDÉ ET APPAREIL POUR LA RÉCUPÉRATION DE PHASE ET LA RECONSTRUCTION D'IMAGERIE VOLUMÉTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.01.2020 KR 20200008497**

(43) Date of publication of application:
**28.07.2021 Bulletin 2021/30**

(73) Proprietors:
• **Tomocube, Inc.**
  **Daejeon 34109 (KR)**
• **Korea Advanced Institute Of Science And Technology**
  **Daejeon, 34141 (KR)**

(72) Inventors:
• **PARK, YongKeun**
  **34141 Daejeon (KR)**
• **BAEK, Yoon Seok**
  **34141 Daejeon (KR)**

(74) Representative: **V.O.**
  **P.O. Box 87930**
  **2508 DH Den Haag (NL)**

(56) References cited:
**EP-A1- 3 255 414**

• **YOONSEOK BAEK ET AL: "Kramers-Kronig holographic imaging for high-space-bandwidth product", OPTICA, vol. 6, no. 1, 20 January 2019 (2019-01-20), page 45, XP055757068, DOI: 10.1364/OPTICA.6.000045**
• **ARKADIUSZ KUS ET AL: "Holographic tomography: hardware and software solutions for 3D quantitative biomedical imaging (Invited paper)", ETRI JOURNAL, vol. 41, no. 1, 1 February 2019 (2019-02-01), pages 61-72, XP055757178, KR ISSN: 1225-6463, DOI: 10.4218/etrij.2018-0505**

**Description**

BACKGROUND

1. Field of the Invention

The following description of example embodiments relates to a method and apparatus for extracting phase information and reconstructing a volumetric image, and more particularly, to a method and apparatus for extracting phase information of a sample and reconstructing a volumetric image based on the extracted phase information.

2. Description of the Related Art

Measurement of phase information of a sample occurring in an electromagnetic wave band corresponding to an area of X-ray, ultraviolet ray, visible ray, and infrared ray and reconstruction of a volumetric image based on the measured phase information may be important to analyze the sample. For example, when a visible light source having an excellent coherence, such as a laser, is incident to a biological sample, an optical phase delay occurs according to a refractive index distribution of the sample. Conventionally, phase information of the sample may be extracted by causing light interference using, for example, an in-line holography or an off-axis holography and by measuring an interference pattern or a hologram using an image sensor. Also, a volumetric image may be reconstructed based on three-dimensional (3D) refractive index information by synthesizing a plurality of two-dimensional (2D) phase information images extracted at various angles.

However, in the existing art, for example, Korean Registration Patent No. 10-1888924 (Patent Document 1), interferometry is complicated or a phase information extraction algorithm needs to use a specific hypothesis to measure an interference pattern or a hologram. For example, in the case of an in-line holography method, it is difficult to extract a high spatial frequency occurring in a sample and an algorithm using an iterative operation is required to extract phase information. Therefore, a relatively long extraction time is required and, in some cases, it may be difficult or impossible to extract accurate phase information. As another example, in the case of an off-axis holography method, it is easy to extract a high spatial frequency and a phase information extraction algorithm is not barely affected by a sample. However, a reference beam should be used. Therefore, a configuration of measurement equipment may be complex and reaction to external vibration may be sensitive. Also, the existing interferometry or holography method generally uses a coherent light source. However, due to such coherence, dust within an optical path of the measurement equipment, fine vibration of optical components, or undesired reflected signals may be simultaneously measured through the interferometry. The signals may be processed as noise and hinder accurate phase measurement.

The publication "Kramers-Kronig holographic imaging for high-space-bandwidh product", YoonSeok Baek et al., Optica vol. 6 no. 1, January 2019, relates to exploiting the Kramers-Kronig relations in digital biography to achieve high SBP imaging, demonstrating a complex amplitude image that can surpass the SBP of a bright-field image. The proposed method requires an image of a reference beam in addition to an off-axis interferogram.

SUMMARY

The present invention is defined by the independent claims.

Example embodiments provide a method and apparatus for extracting phase information and reconstructing a volumetric image, and more particularly, to technology for quantitatively measuring optical phase information of a sample using a general optical imaging apparatus.

Also, example embodiments provide a method and apparatus for extracting phase information and reconstructing a volumetric image that may perform a high-speed diffraction tomography using incoherent light through a high-speed incident angle scanning device for incoherent optical diffraction tomography (ODT) and may outperform a degradation in a signal-to-nose (SNR) ratio caused by the existing coherent noise or artificial results occurring during an image processing process.

According to an aspect of example embodiments, there is provided a method of extracting phase information and reconstructing a volumetric image, the method including measuring an intensity image of light that passes a sample using an optical signal measurement device; and extracting optical phase information of the sample by applying Kramers-Kronig relations to the measured intensity image. A volumetric image is reconstructed based on phase information extraction of the sample and the phase information.

The method may further include measuring a two-dimensional (2D) phase image of the sample at various incident angles by scanning an angle of incident light in an azimuthal direction while maintaining an angle between the incident light and an optical axis. A three-dimensional (3D) volumetric image may be reconstructed through a plurality of 2D phase images.

The method may further include reconstructing a 3D refractive index volumetric image using inverse scattering of the measured 2D phase images.

A 2D phase image or a 3D refractive index volumetric image of at least one fine sample among microorganisms, cells, tissues, thin films, nano-photonics, optical fibers, microparticles, and fine dust may be measured.

The method may further include modulating an angle of incident light using a high-speed incident angle scanning device capable of quickly modulating an incident angle to measure a 2D phase image of the sample at various incident angles.

The modulating of the angle of the incident light may include modulating the angle of the incident light using a diffractive tilting method of modulating an angle of light in a form of diffraction occurring by changing a structure of a reflective surface through a spatial light modulator (SLM).

According to an aspect of example embodiments, there is provided an apparatus for extracting phase information and reconstructing a volumetric image, the apparatus including an image measurer configured to measure an intensity image of light that passes a sample using an optical signal measurement device; and a phase information extractor configured to extract optical phase information of the sample by applying Kramers-Kronig relations to the measured intensity image. A volumetric image is reconstructed based on phase information extraction of the sample and the phase information.

The image measurer may be further configured to measure a 2D phase image of the sample at various incident angles by scanning an angle of incident light in an azimuthal direction while maintaining an angle between the incident light and an optical axis, and to reconstruct a 3D volumetric image through a plurality of 2D phase images.

The image measurer may be further configured to reconstruct a 3D refractive index volumetric image using inverse scattering of the measured 2D phase images.

The apparatus may further include a high-speed incident angle scanning device configured to modulate an angle of incident light to measure a 2D phase image of the sample at various incident angles.

According to example embodiments, there may be provided a method and apparatus for extracting phase information and reconstructing a volumetric image that may use an incoherent light source as well as a coherent light source such as a laser, and may quantitatively measure optical phase information using a general optical imaging apparatus without a need to reconstruct existing complex interferometry.

Also, according to example embodiments, there may be provided a method and apparatus for extracting phase information and reconstructing a volumetric image that may perform a high-speed diffraction tomography using incoherent light through a high-speed incident angle scanning device for incoherent optical diffraction tomography (ODT) and may outperform a degradation in a signal-to-nose (SNR) ratio caused by the existing coherent noise or artificial results occurring during an image processing process.

Further areas of applicability will become apparent from the description provided herein. The description and specific examples in this summary are intended for purposes of illustration only and are not intended to limit the scope of the present disclosure.

BRIEF DESCRIPTION OF THE DRAWINGS

These and/or other aspects, features, and advantages of the invention will become apparent and more readily appreciated from the following description, taken in conjunction with the accompanying drawings of which:

FIG. 1A illustrates an example of describing an apparatus for extracting phase information and reconstructing a volumetric image according to an example embodiment;

FIG. 1B illustrates an example of describing a method of extracting phase information of a sample according to an example embodiment;

FIG. 2 illustrates an example of describing a method of reconstructing a three-dimensional (3D) volumetric image according to an example embodiment;

FIG. 3A illustrates an example of a transmissive optical system according to an example embodiment;

FIG. 3B illustrates an example of a reflective optical system according to an example embodiment;

FIG. 4A illustrates an example of a transmissive structure that allows incident light to be incident to a sample without using a lens according to an example embodiment;

FIG. 4B illustrates an example of a transmissive structure that allows incident light to be incident to a sample using a lens according to an example embodiment;

FIG. 4C illustrates an example of a reflective structure that allows incident light and reflected light to be reflected using a single lens according to an example embodiment;

FIG. 4D illustrates an example of a reflective structure that allows incident light and reflected light to be reflected using separate lenses according to an example embodiment;

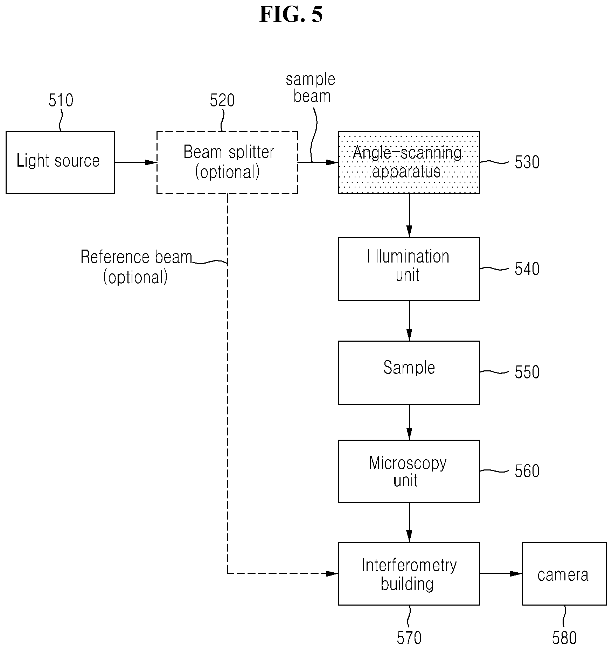

FIG. 5 illustrates an example of a high-speed incident angle scanning method;

FIG. 6 illustrates an example of a high-speed incident angle scanning device;

FIGS. 7A and 7B illustrate examples of a diffractive tilting method for modulating an angle of light through a spatial light modulator (SLM) according to an example embodiment;

FIG. 8 illustrates an example of describing a 4F system according to an example embodiment;

FIG. 9A illustrates an example of describing a spectroscopic effect of a digital micromirror device (DMD) in which an optical grating is present on a conjugated sample plane of a sample plane according to an example embodiment;

FIG. 9B illustrates an example of describing a spectroscopic effect of an optical grating that is present in front of or at the rear of a DMD according to an example embodiment;

FIG. 10 illustrates an example of describing a diffractive tilting of incoherent light using a ferroelectric SLM (fSLM) according to an example embodiment;

FIG. 11 illustrates an example of 8 bits according to an example embodiment;

FIG. 12 illustrates an example of describing a structured illumination of a DMD according to an example embodiment;

FIG. 13 illustrates an example of describing a structured illumination of an fSLM according to an example embodiment;

FIG. 14 is a block diagram illustrating an example of an apparatus for extracting phase information and reconstructing a volumetric image according to an example embodiment;

FIG. 15 is a flowchart illustrating an example of a method of extracting phase information and reconstructing a volumetric image according to an example embodiment;

FIG. 16 illustrates actual measured phase information images according to an example embodiment;

FIG. 17 illustrates actual measured volumetric images according to an example embodiment; and

FIG. 18 illustrates images each in which 3D refractive index information is measured according to an example embodiment.

## DETAILED DESCRIPTION

Hereinafter, example embodiments will be described with reference to the accompanying drawings. One or more example embodiments will be described in detail with reference to the accompanying drawings. Example embodiments, however, may be embodied in various different forms, and should not be construed as being limited to only the illustrated embodiments. Rather, the illustrated embodiments are provided as examples so that this disclosure will be thorough and complete, and will fully convey the concepts of this disclosure to those skilled in the art. In the drawings, shapes, sizes, etc., of components may be exaggerated for clear description.

The following example embodiments provide a principle of extracting phase information of a sample and reconstructing a volumetric image based on the extracted phase information, and a method of implementing the principle. The example embodiments may measure a two-dimensional (2D) image or a three-dimensional (3D) image of a fine sample using a simple imaging system and a general low-coherent light source, for example, a light emitting diode (LED), a laser diode, a super-luminescence LED, a fluorescence lamp, a xenon lamp, and a tungsten lamp.

Through this, an application example including the following may be applied. According to example embodiments, it is possible to measure a 2D phase image or a 3D refractive index image of a sample, such as microorganisms, cells, tissues, and the like. Also, according to example embodiments, it is possible to measure, analyze, and inspect an internal structure and a refractive index of a sample having a feature ranging from hundreds of nanometers to tens of micrometers and having a size ranging from a few micrometers to a few meters, such as thin films, nano-photonics, optical fibers, microparticles, fine dust, and the like.

The example embodiments may extract phase information of a sample without using coherence of a light source or a reference beam by applying Kramers-Kronig relations based on causality that previous information determines future in the physics. The Kramers-Kronig relations may be represented by the following Equation 1.

[Equation 1]

$$\mathrm{Im}\big[f(x)\big] = -\frac{1}{\pi} \mathrm{P} \int_{-\infty}^{\infty} \frac{\mathrm{Re}\big[f(x')\big]}{x'-x} dx',$$

In detail, Equation 1 may be represented by the following Equation 2 and Equation 3 by applying Equation 1 to electric field E.

[Equation 2]

$$\mathrm{Re}\left[\log(E)\right] = \log\left(|E|^2\right) = \log(I)/2,$$

[Equation 3]

$$\mathrm{Im}\left[\log(E)\right] = \arg(E),$$

If susceptibility $\chi(\mathbf{r})$ of a sample meets the following two conditions, it may be represented by the following Equation 4.

First, an incident angle has a maximum spatial frequency allowed by a pupil function. Second, un-scattered light is stronger than scattered light.

Condition 1. The first condition ensures that the Fourier spectrum of $\chi$ vanishes in the negative domain of a transverse wave vector. The asymmetric Fourier spectrum indicates the analyticity in the upper half-plane because it is treated as the causality if the wave vector is replaced with time, and the causality and the analyticity are interchangeable for the Kramers-Kronig relations.

Condition 2. The second condition relates to a square-integrability of $\chi$, which may be interpreted as multiple Born or Rytov scattering (see supplementary information (see supplementary information). By applying Equation 1 to component $r_{\parallel}$ of $\chi(\mathbf{r})$, the electric field E may be expressed as the following Equation 4.

[Equation 4]

$$E(r) = \epsilon(r)e^{ik_{inc}\cdot r} = \exp\left[\frac{\log[I(r)]}{2} - \frac{i}{\pi}P\int_{-\infty}^{\infty}\frac{\log[I(r')]}{2(r'_{\parallel}-r_{\parallel})}dr'_{\parallel} + ik_{inc}\cdot r\right]$$

In Equation 4, $r' = r'_{\parallel}\hat{r}_{\parallel} + r'_{\perp}\hat{r}_{\perp}$ , and $\hat{r}_{\parallel}\cdot k_{inc} = -k_{inc}$ .

Therefore, a conclusion that the electric field E is measurable may be achieved.

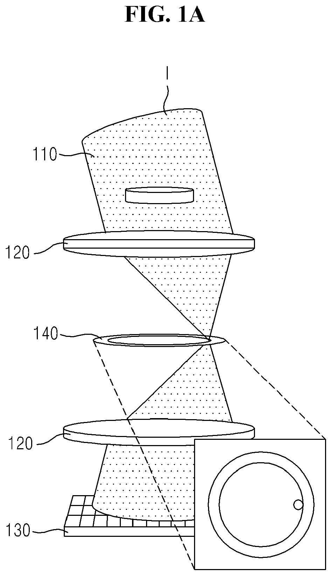

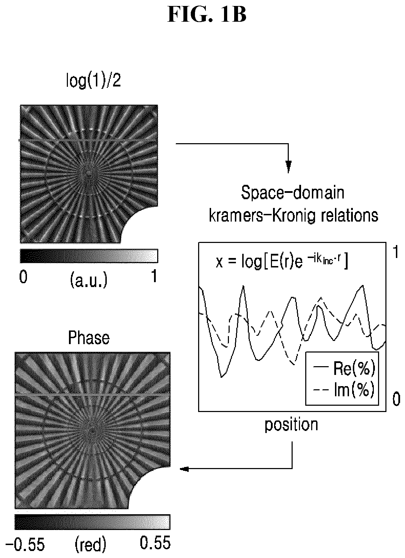

FIG. 1A illustrates an example of describing an apparatus for extracting phase information and reconstructing a volumetric image according to an example embodiment, and FIG. 1B illustrates an example of describing a method of extracting phase information of a sample according to an example embodiment.

To meet the condition 1, an incident angle needs to be set to meet an angle of light incident to a sample or a maximum angle of a spatial frequency allowed in imaging. To this end, referring to FIG. 1A, the apparatus for extracting phase information and reconstructing a volumetric image needs to be manufactured to maximize an incident angle of a light source 1 at an optical axis and, at the same time, allow a spatial frequency corresponding to the incident angle. The apparatus for extracting phase information and reconstructing a volumetric image may be included in an optical signal measurement device or may include the optical signal measurement device.

Here, the apparatus for extracting phase information and reconstructing a volumetric image may include an object 110, a detector 130, a plurality of lenses 120 provided between the object 110 and the detector 130, and an iris 140 provided between the plurality of lenses 120. Here, the iris 140 may be omitted.

To meet the condition 2, when light is emitted from a light source toward a sample, intensity of light that passes the sample needs to be at least 1% or more compared to intensity of incident light and the magnitude of this light needs to arrive at an optical measurer. At the same time, a level of scattering of light should not be great in the sample. In detail, a maximum thickness of the sample needs to be less than a length corresponding to ten times of a scattering mean free path of a material in the sample.

In the case of measuring an intensity image of light that passes the sample using an optical signal measurement device that meets the above two conditions, that is, condition 1 and condition 2, an image as shown in an upper portion of FIG. 1B may be measured. Here, by applying the principle proposed in the present example embodiment arranged through Equation 1 to Equation 4, phase information of the sample may be quantitatively extracted as shown in a lower portion of FIG. 1B.

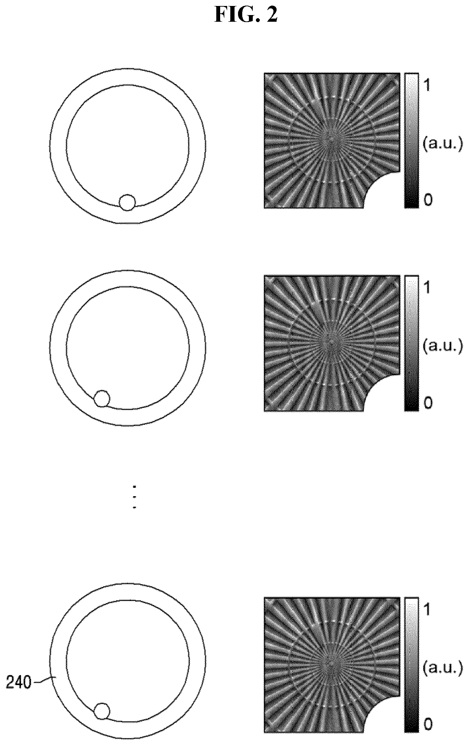

FIG. 2 illustrates an example of describing a method of reconstructing a 3D volumetric image according to an example embodiment.

Also, a plurality of 2D phase images may be measured by variously changing an angle of incident light using the aforementioned method and a 3D volumetric image may be reconstructed based on the plurality of 2D phase images. Referring to FIG. 2, a 2D phase image may be measured at various incident angles by scanning an angle of incident angle in an azimuthal direction while maintaining an angle between the incident light and an optical axis. Here, an angle of incident light may be scanned in an azimuthal direction along an iris 240. A 3D refractive index volumetric image may be reconstructed using inverse scattering of the measured phase images.

In detail, a 3D complex refractive index volumetric image may be recovered by mapping 2D phase image information measured at each incident angle on a 3D Fourier space and by performing an inverse Fourier transformation thereof using a Fourier slice theorem or a Fourier diffraction theorem.

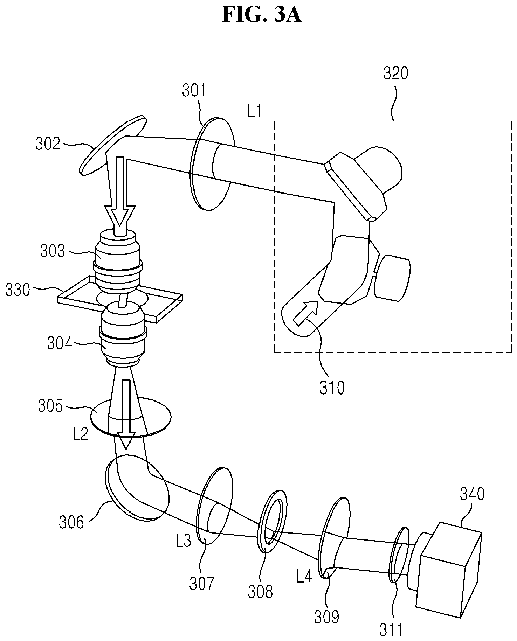

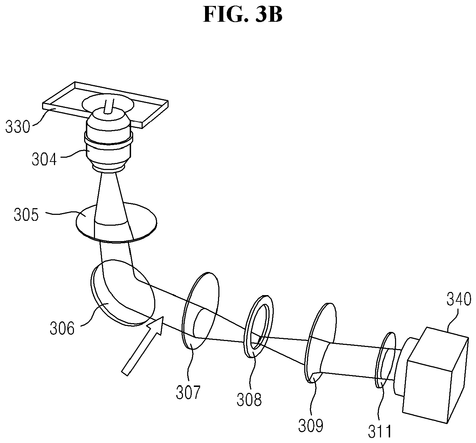

FIG. 3A illustrates an example of a transmissive optical system according to an example embodiment, and FIG. 3B illustrates an example of a reflective optical system according to an example embodiment.

Referring to FIGS. 3A and 3B, an optical system may generally include a light source, an angle controller, a sample portion, and an image measurer. The optical system may be manufactured into the transmissive optical system of FIG. 3A or the reflective optical system of FIG. 3B based on its purpose.

The optical system may adjust light emitted from the light source using the angle controller and may guide the adjusted light to a condensing lens 303 of the sample portion through a lens L1 301 and a mirror 302. Here, in the sample portion, a sample to be measured may be provided between the condensing lens 303 and an objective lens 304. Therefore, the optical system may adjust the light emitted from the light source using the angle controller, may allow the light to pass the sample placed between the condensing lens 303 and the objective lens 304, and may measure an image using the image measurer such as a camera. Here, the light that passes the objective lens 304 may be guided to the apparatus for extracting phase information and reconstructing a volumetric image using a lens L2 305 and a mirror 306. The apparatus for extracting phase information and reconstructing a volumetric image may include an iris 308 between a plurality of lenses, for example, a lens L3 307 and a lens L4 309 and may guide to a camera 340 through a filter 311. Here, the iris 308 and the filter 311 may be omitted.

The light source may use a general light source. The principle of the example embodiments may apply to a laser having a high coherence as well as low coherent light sources, such as, for example, an LED, a laser diode, a super-luminescence LED, a micro LED, a fluorescence lamp, a xenon lamp, and a tungsten lamp. A centric wavelength of the light source is 100 nm or more and 2 um or less. The light source may operate in any temporal light emitting form that includes a continuous wave or a pulsed wave.

The angle controller may adjust an angle of light incident to the sample by precisely controlling the light emitted from the light source. The angle controller may be implemented using devices, such as, for example, a rotation instrument to which a mirror is attached, a galvanometric mirror, a micro-electro-mechanical systems (MEMS) mirror, a piezoelectric beam deflector, a beam control using a digital micromirror device (DMD), a deformable mirror, and a spatial light modulator (SLM).

Also, the light source and the angle controller may be implemented into a single device. For example, an LED array or a micro LED array may be used.

The sample portion may use a lens or an objective lens having a large numerical aperture (NA) value to increase an angle of light incident to the sample. The sample portion may be variously implemented for detailed application depending on whether a structure is a transmissive type or a reflective type and whether the objective lens is used. For example, the sample portion may be embodied as follows.

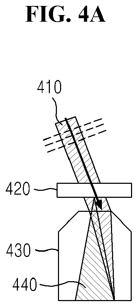

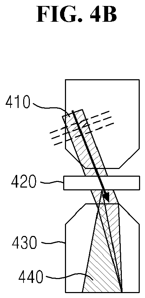

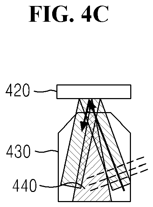

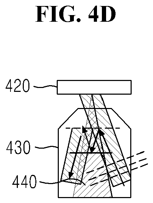

FIG. 4A illustrates an example of a transmissive structure that allows incident light to be incident to a sample without using a lens according to an example embodiment, and FIG. 4B illustrates an example of a transmissive structure that allows incident light to be incident to a sample using a lens according to an example embodiment. Also, FIG. 4C illustrates an example of a reflective structure that allows incident light and reflected light to be reflected using a single lens according to an example embodiment, and FIG. 4D illustrates an example of a reflective structure that allows incident light and reflected light to be reflected using separate lenses according to an example embodiment.

Referring to FIG. 4A, the transmissive structure of allowing incident light 410 emitted from a light source to be incident to a sample 420 without using a lens and acquiring scattered light using a lens 430 may be implemented. Referring to FIG. 4B, the transmissive structure of allowing incident light 410 to be incident to the sample 420 through the lens 430 and acquiring the scattered light 440 using another lens 430 may be implemented. Also, referring to FIG. 4C, the reflective structure of reflecting the incident light and the reflected light using a single lens 430 may be implemented. Referring to FIG. 4D, the reflective structure of reflecting the incident light and the reflected light using a Mirau lens or an interferometric objective lens. Here, in FIG. 4C, a phase signal may be measured using scattered light 440 scattered from the sample 420 and the reflected light from a slide surface on which the sample 420 is placed. On the contrary, in FIG. 4D, a phase signal may be measured using the scattered light 440 scattered from the sample 420 and the reflected light reflected inside the lens 430.

The image measurer may measure an optical intensity image through an image sensor using, for example, a charge coupled device (CCD), a scientific CCD, a complementary metal-Oxide semiconductor (CMOS) sensor, and the like.

According to example embodiments, an incoherent light source as well as a coherent light source may be used, and optical phase information of a sample may be quantitatively measured using a general optical imaging device without reconstructing existing complex interferometry.

Hereinafter, a high-speed incident angle scanning method and apparatus for incoherent optical diffraction tomography (ODT) will be described. The high-speed incident angle scanning method and apparatus for incoherent ODT enables high-speed ODT using incoherent light and may outperform artificial results occurring during an SNR image processing process caused by the existing coherent noise.

According to example embodiments, an incident angle scanning device using a diffractive tilting method through various SLMs is proposed to outperform some limit found in the existing reflective tilting method. Through this, although incoherent light is used, an interference pattern may be maintained on a sample regardless of an incident angle. Also, proposed is herein an incident angle scanning device capable of performing high-speed modulation due to a characteristic of ODT that requires a plurality of quantitative phase images measured at different incident angles. and may apply to a portion of an angle scanning device 530 of existing ODT technology. Here, light emitted from a light source 510 may be separated into a sample beam and a reference beam using a beam splitter 520. The sample beam may be used to adjust an angle of light incident to the sample 550 through the angle scanning device 530. The sample 550 is provide between an illumination unit 540 and a microscopy unit 560. The light passing the sample 550 may pass through an interferometry 570 and may be measured through a camera 580.

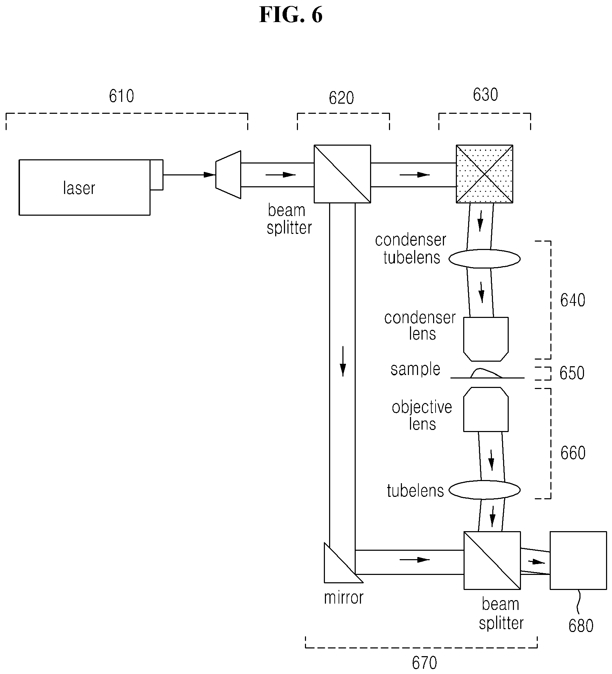

FIG. 6 illustrates an example of a high-speed incident angle scanning device.

Referring to FIG. 6, the high-speed incident angle scanning device refers to an apparatus for adjusting an angle of light incident to a sample for ODT using an incoherent light. For example, in the case of a most-general Mach-Zehnder ODT setup, a sample beam may apply before incidence to a sample 650 and then may be transmitted to the sample 650 through a plurality of lenses or mirrors.

As described above, light emitted from a laser light source 610 may be separated into a sample beam and a reference beam using a beam splitter 620. The sample beam may be used to adjust an angle of light incident to the sample 650 through an angle scanning device 630. The sample 650 may be provided between an illumination unit 640 and a microscopy unit 660. The light passing the sample 650 may pass through an interferometry 670 and may be measured through a camera 680. The interferometry 670 may include a mirror and a beam splitter.

Here, the term "incoherent light" indicates a temporal incoherence and thus, still needs a spatial coherence. Examples of a light source that emits such light may include a supercontinuum source, a super-luminescent diode, and the like, and may use a light source having an incoherence in both time and space, such as, for example, a xenon lamp, a halogen lamp, an LED, and the like, through spatial filtering.

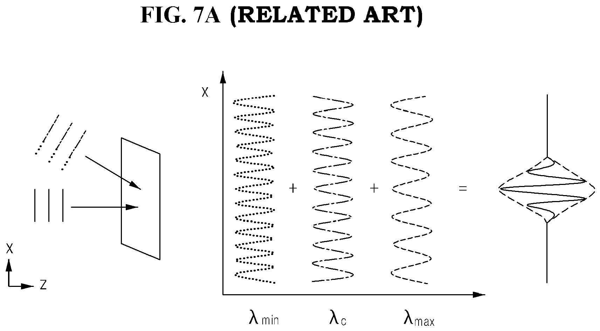

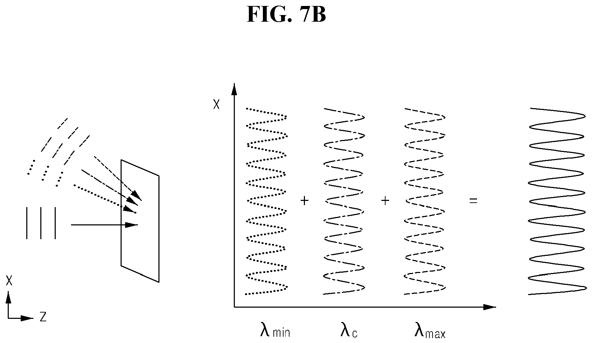

FIGS. 7A and 7B illustrate examples of a diffractive tilting method for modulating an angle of light through an SLM according to an example embodiment.

Referring to FIGS. 7A and 7B, an angle scanning method according to an example embodiment may use a diffractive tilting method of modulating an angle of light in a form of diffraction occurring by changing a structure of a reflective surface through an SLM, which differs from an existing reflective tilting method of moving a reflective surface such as in Galvo mirrors or a piezo mirror.

Referring to FIG. 7A, the existing reflective tilting method modulates incoherent incident light to be the same angle $\theta$ regardless of a wavelength. Here, a path difference perceived by light at a position separate from a sample plane by a distance x above an incident plane of modulated light is $d = x\sin\theta$. as a modulation angle increases and a distance x from a reference point increases, the path difference of light increases. Here, the incoherent light is used. Therefore, if the path difference is greater than a coherence length, the light does not interfere anymore and a phase may not be defined. Therefore, the existing reflective tilting method may not be suitable for modulating an angle of incoherent light for ODT.

Referring to FIG. 7B, dissimilar to the reflective tilting method, a diffractive tilting method according to an example embodiment may modulate an angle of light at the same lateral spatial frequency $k_x = \dfrac{\sin\theta}{\lambda}$ regardless of a wavelength included in incoherent light. As shown in the equation, a modulation angle increases according to an increase in a wavelength for a single $k_x$, which may lead to spectrograph of the wavelength included in incoherent light. To control such a spectroscopic effect, an example embodiment provides a corresponding modulation plane on a conjugated sample plane at all times using an additional optical system.

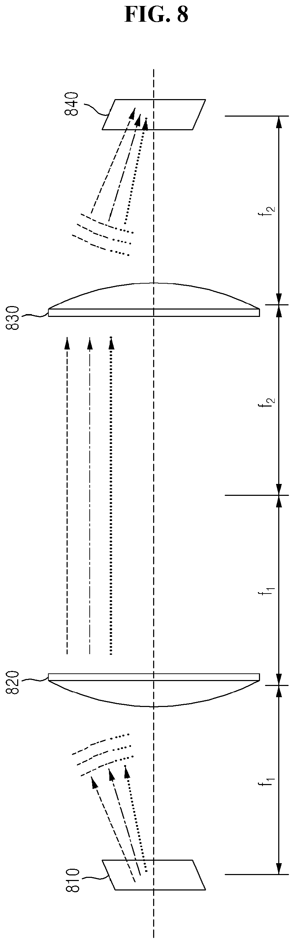

FIG. 8 illustrates an example of describing a 4F system according to an example embodiment. Referring to FIG. 8, a single known method relates to a 4F system using two lenses 820 and 830. If such a condition is met, a path difference perceived by modulated light above sample planes 810 and 840 has no relation to a modulation angle or a distance x from a reference point.

According to an example embodiment, a modulate plane may use a transmissive surface or a reflective surface of an SLM. An SLM in various types may be used. However, if a general liquid crystal based SLM is used, a sample may move during an angle scanning process due to a characteristic of ODT that requires a plurality of quantitative phase images measured at difference incident angles. Therefore, the example embodiments may specify a method of using an SLM in a binary modulation form capable of performing a high-speed modulation. In detail, description may be made based on an example of using a digital micromirror device (DMD) capable of performing a high-speed binary amplitude modulation and a ferroelectric SML (fSLM) capable of performing a high-speed phase modulation.

Initially, a diffractive tilting of incoherent light using a DMD is described.

The DMD, as a type of an SML capable of performing a high-speed binary amplitude modulation, serves as an incident light modulator in many fields including ODT at a relatively low price and fast speed compared to other SLMs. However, the DMD may not be readily used as is for incoherent light since each pixel of the DMD includes a tilted micromirror and the DMD itself not showing any pattern causes light spectroscopy with a diffractive effect such as a blazed optical grating.

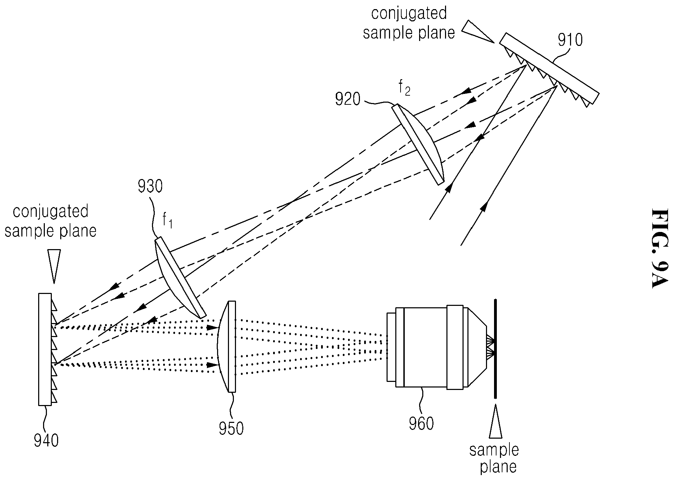

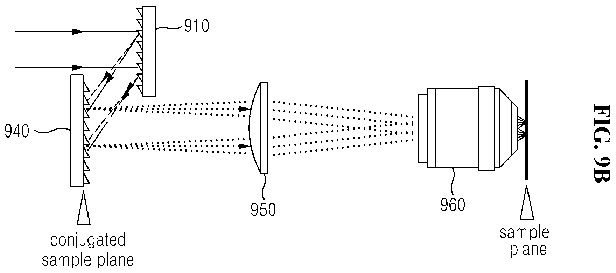

FIG. 9A illustrates an example of describing a spectroscopic effect of a DMD in which an optical grating is present on a conjugated sample plane according to an example embodiment. Also, FIG. 9B illustrates an example of describing a spectroscopic effect of an optical grating that is present in front of or at the rear of a DMD according to an example embodiment.

In the example embodiment regarding incoherent light, a spectroscopic effect of a DMD 940 may be compensated for by additionally introducing an optical grating 910 having a grating length and a blazed angle identical to those of the DMD 940. It may be most idealistic to provide the optical grating 910 on another conjugated sample plane using an additional optical system as shown in FIG. 9A, and, otherwise, may be present in front of or at the rear of the DMD 940 instead of being on the conjugated sample plane as shown in FIG. 9B. In the latter case, as a distance from the conjugated sample plane increases, the spectroscopic effect by the blazed angle of the DMD 940 may become outstanding, which may lead to limiting intensity of available (unspectralized) light. In both cases, the optical grating 910 used may be replaced with another DMD immovable and simply in an idle state.

The DMD 940 of which the spectroscopic effect is compensated for may be control a binary amplitude of incoherent light on a sample plane at a high speed. From here, a structure illumination method through a time-multiplexing introduced from Patent Document 1 may be applied and a high-speed incident angle scanning device for ODT may be completed.

Here, a plurality of lenses 920 and 930 may be used and a condensing tube lens 950 and a condensing lens 960 may be used.

Hereinafter, an incoherent light diffractive tilting using an fSLM will be described.

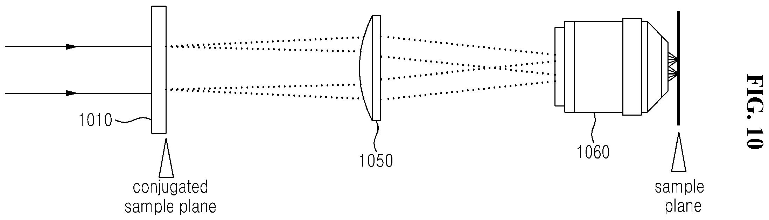

FIG. 10 illustrates an example of describing a diffractive tilting of incoherent light using a ferroelectric SLM (fSLM) according to an example embodiment.

Dissimilar to a general SLM, an fSLM may modulate a phase of light at a level of kilohertz (kHz). Referring to FIG. 10, in the case of using an fSLM 1010, there is no spectroscopic effect such as that of a DMD and diffractive tilting may be performed simply by providing a reflective or transmissive surface of the fSLM 1010 on a conjugated sample plane. The general SLM may represent various phase values, such as, for example, 8 bits, whereas the fSLM 1010 may represent only a binary (0 or p) phase. Therefore, dissimilar to the SLM that simply represents a linearly increasing phase for diffractive tilting, the fSLM 1010 also requires a structured illumination through a time-multiplexing method, which is similar to the aforementioned DMD. Here, a condensing tube lens 1050 and a condensing lens 1060 may be used.

However, there is no great difference between the time-multiplexing method of the DMD using a binary amplitude and that of the fSLM 1010 using a binary phase since a complex amplitude of light of which phase 0 or $\pi$ is modulated by the fSLM 1010 has a real number value, for example, $\exp(i \cdot 0)=1$ or $\exp(i \cdot \pi)=-1$. Therefore, any fSLM pattern $P_{\text{fSLM}}$ may make a one-to-one correspondence with respect to DMD pattern $P_{\text{DMD}}$ using $P_{\text{fSLM}} = 2P_{\text{DMD}} - 1$. A generation of a multi-bit pattern using the time-multiplexing method may be replaced in the same manner.

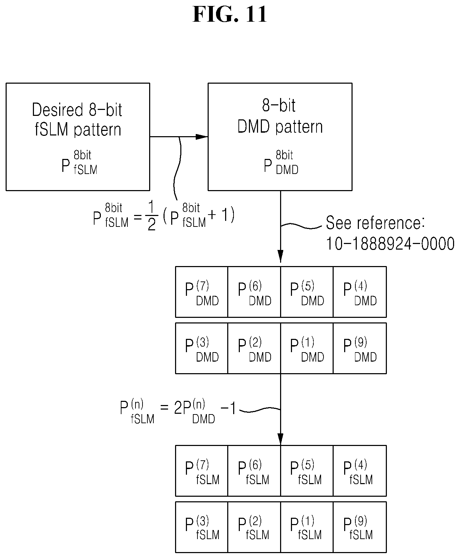

FIG. 11 illustrates an example of 8 bits according to an example embodiment. Therefore, initially, a desired fSLM multi-bit pattern (e.g., if 8 bits, $P_{\text{fSLM}}^{\text{8bit}}$ ) is replaced with a DMD multi-bit pattern (e.g., if 8 bits, $P_{\text{DMD}}^{\text{8bit}}$ ) and

$$P_{\text{DMD}}^{\text{8bit}} = \frac{1}{2}\left( P_{\text{fSLM}}^{\text{8bit}} + 1 \right)$$

, as introduced in Patent Document 1, the DMD multi-bit pattern is divided by a binary bit plane $P_{\text{DMD}}^{(n)}$ corresponding to a number of bits (e.g., if 8 bits,

$$P_{\text{DMD}}^{\text{8bit}} = \sum_{n=0}^{7} 2^n P_{\text{DMD}}^{(n)}$$

). A bit plane required for the fSLM may be acquired by applying again the divided binary DMD pattern to $P_{\text{fSLM}}^{(n)} = 2P_{\text{DMD}}^{(n)} - 1$ .

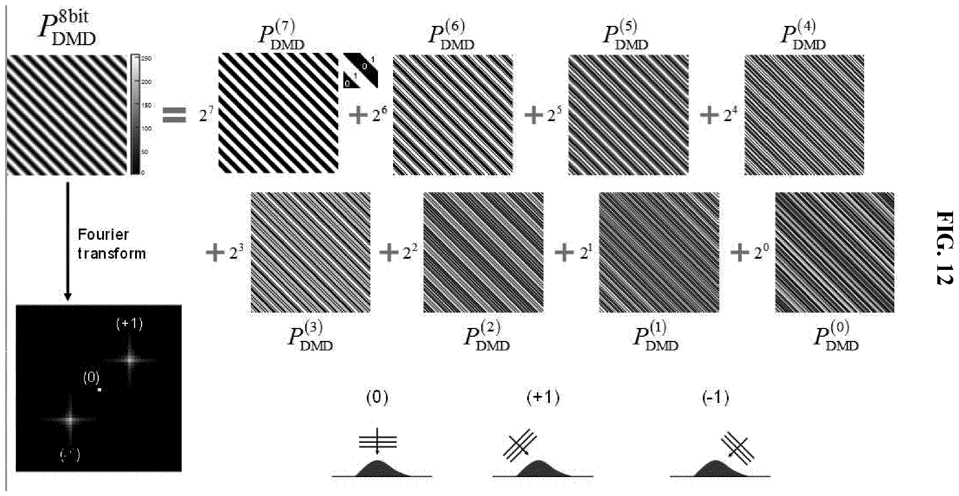

FIG. 12 illustrates an example of describing a structured illumination of a DMD according to an example embodiment.

A structured illumination using an fSLM may be practical compared to a structured illumination using a DMD. Referring to FIG. 12, in the case of the structured illumination of the DMD, the DMD may represent only a positive real number. Therefore, a portion corresponding to a normal angle that is an angle perpendicular to a sample is present in any structured illumination at all times. Therefore, in the structured illumination manufactured using the DMD, at least three incident angles are present at all times and one of the three incident angles is a normal angle component at all times. To separate this into the respective incident angle components, at least three phase shifts are required for a single structured illumination. Here, a number of phase shifts may be reduced to two by separately measuring a normal angle result and by subtracting a measurement result from all of the structured illumination results. However, this method may be unavailable if a sample varies even slightly over time.

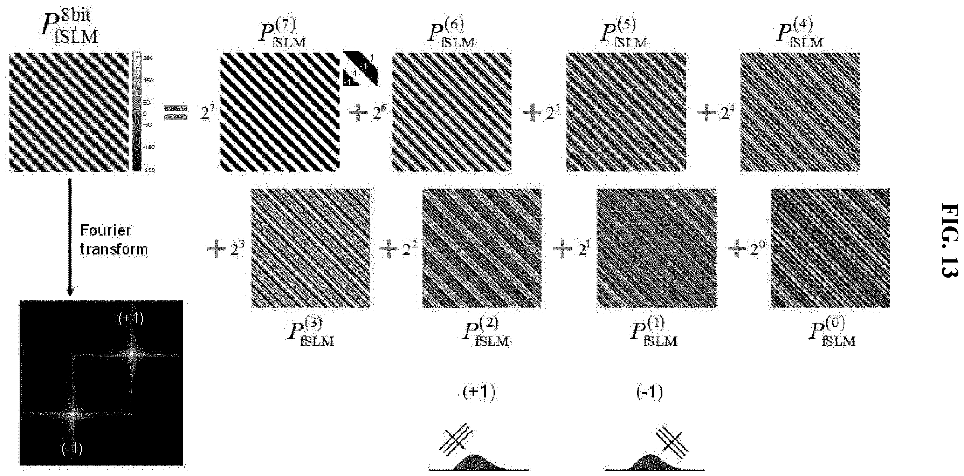

FIG. 13 illustrates an example of describing a structured illumination of an fSLM according to an example embodiment.

Referring to FIG. 13, in the case of the structured illumination of the fSLM, a portion corresponding to a normal angle may be removed since the fSLM is also capable of representing a negative real number. Therefore, in the structured illumination manufactured using the fSLM, at least two incident angles may be present in a form in which the normal angle is removed. To separate this into the respective incident angle components, two phase shifts may be sufficient.

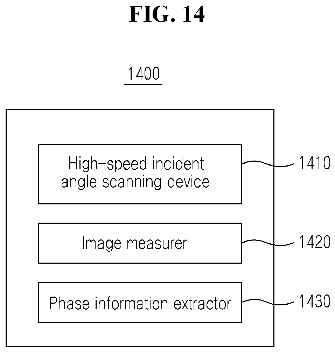

FIG. 14 is a block diagram illustrating an example of an apparatus for extracting phase information and reconstructing a volumetric image according to an example embodiment.

Referring to FIG. 14, an apparatus 1400 for extracting phase information and reconstructing a volumetric image (hereinafter, referred to as the apparatus 1400 may include an image measurer 1420 and a phase information extractor 1430. Depending on example embodiments, the apparatus 1400 may further include a high-speed incident angle scanning device 1410.

The image measurer 1420 may measure an intensity image of light that passes a sample using an optical signal measurement device. The phase information extractor 1430 may extract optical phase information of the sample by applying Kramers-Kronig relations to the measured intensity image. A volumetric image may be reconstructed based on phase information extraction of the sample and the phase information. Here, a 2D phase image or a 3D refractive index volumetric image of at least one fine sample among microorganisms, cells, tissues, thin films, nano-photonics, optical fibers, microparticles, and fine dust may be measured.

The image measurer 1420 may measure a 2D phase image of the sample at various incident angles by scanning an angle of incident light in an azimuthal direction while maintaining an angle between the incident light and an optical axis, and may reconstruct a 3D volumetric image through a plurality of 2D phase images. In addition, the image measurer 1420 may reconstruct a 3D refractive index volumetric image using inverse scattering of the measured 2D phase images.

Also, the high-speed incident angle scanning device 1410 may modulate an angle of incident light to measure a 2D phase image of the sample at various incident angles.

Hereinafter, an example of an apparatus for extracting phase information and reconstructing a volumetric image according to an example embodiment is further described.

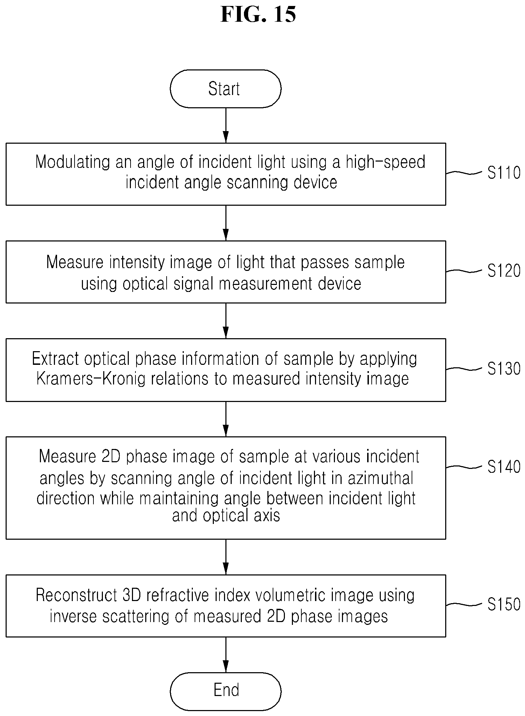

FIG. 15 is a flowchart illustrating an example of a method of extracting phase information and reconstructing a volumetric image according to an example embodiment.

Referring to FIG. 15, the method of extracting phase information and reconstructing a volumetric image may include operation S120 of measuring an intensity image of light that passes a sample using an optical signal measurement device and operation S130 of extracting optical phase information of the sample by applying Kramers-Kronig relations to the measured intensity image, and may reconstruct a volumetric image based on phase information extraction of the sample and the phase information.

Here, the method may further include operation S140 of measuring a 2D phase image of the sample at various incident angles by scanning an angle of incident light in an azimuthal direction while maintaining an angle between the incident light and an optical axis, and may reconstruct a 3D volumetric image through a plurality of 2D phase images.

Also, the method may further include operation S150 of reconstructing a 3D refractive index volumetric image using inverse scattering of the measured 2D phase images.

Meanwhile, the method may further include operation S110 of modulating an angle of incident light using a high-speed incident angle scanning device capable of quickly modulating an incident angle to measure a 2D phase image of the sample at various incident angles.

Hereinafter, each of operations included in the method of extracting phase information and reconstructing a volumetric image will be further described. The method of extracting phase information and reconstructing a volumetric image according to an example embodiment may be performed by an apparatus for extracting phase information and reconstructing a volumetric image according to an example embodiment.

Referring to FIG. 15, in operation S110, a high-speed incident angle scanning device may modulate an angle of incident light to measure a 2D phase image of a sample at various incident angles. The high-speed incident angle scanning device may modulate the angle of the incident light using a diffractive tilting method of modulating an angle of light in a form of diffraction occurring by changing a structure of a reflective surface through an SLM.

In operation S120, the image measurer may measure an intensity image of light that passes a sample using an optical signal measurement device.

In operation S130, the phase information extractor may extract optical phase information of the sample by applying Kramers-Kronig relations to the measured intensity image.

In operation S140, the image measurer may measure a 2D phase image of the sample at various incident angles by scanning an angle of incident light in an azimuthal direction while maintaining an angle between the incident light and an optical axis, and may reconstruct a 3D volumetric image through a plurality of 2D phase images.

In operation S150, the image measurer may reconstruct a 3D refractive index volumetric image using inverse scattering of the measured 2D phase images.

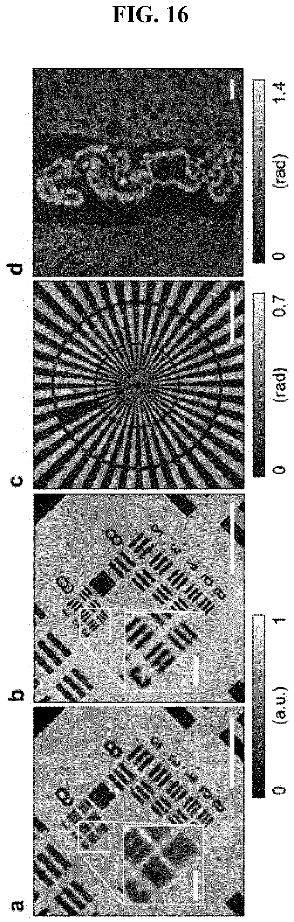

FIG. 16 illustrates actual measured phase information images according to an example embodiment.

FIG. 16 illustrates phase information images actually measured using equipment configured by applying a method according to an example embodiment. Referring to FIG. 16, (a) relates to a US air force resolution target sample and a result of measuring the sample using existing interferometry, (b) relates to a result of measuring the same sample using the method proposed according to the example embodiment. Here, it can be verified that speckle noise present in the general interferometry is significantly enhanced. Also, (c) relates to a phase resolution target sample and it can be verified that the method and apparatus according to the example embodiment may measure an accurate phase delay value. Also, (d) relates to a biological sample (a human tissue sample) and it can be verified that the method and apparatus according to the example embodiments are available for biological research and medical diagnosis.

Also, if a plurality of 2D phase information images is measured by changing an incident angle, 3D refractive index information may be reconstructed.

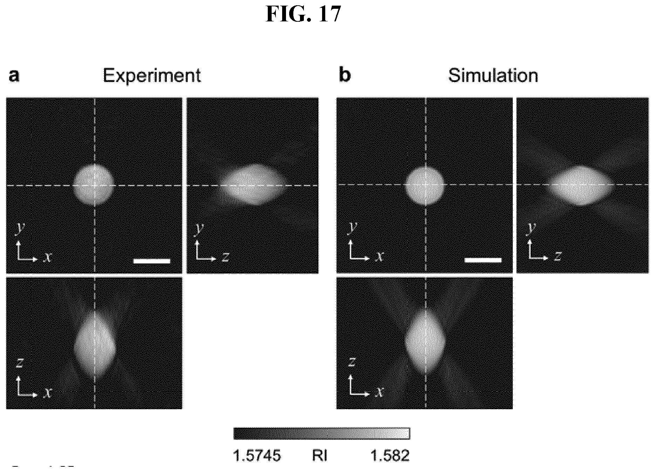

FIG. 17 illustrates actual measured volumetric images according to an example embodiment.

Referring to FIG. 17, volumetric images are actually measured through experiment and simulation using equipment reconstructed by applying the method according to the example embodiment. (a) of FIG. 17 relates to images acquired by experimentally measuring plastic particles, and the images match result values predicted as shown in (b) of FIG. 17.

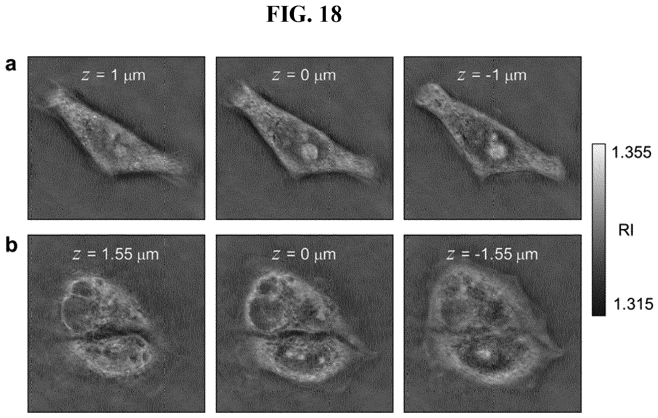

FIG. 18 illustrates images each in which 3D refractive index information is measured according to an example embodiment. FIG. 18 illustrates images acquired by measuring 3D refractive index information of a biological sample (cancer cell line).

When a component is described to be "connected to" or "accessed to" another component, the component may be directly connected to or accessed to the other component. Alternatively, another intervening component may be present therebetween. On the contrary, when a component is described to be "directly connected to" or "directly accessed to" to another component, there is no intervening component therebetween. The terms used herein are used to explain specific embodiments and are not construed to limit the disclosure. The singular forms "a", "an", and "the" are intended to include the plural forms as well, unless the context clearly indicates otherwise. Here, It will be further understood that the terms "comprises/includes" and/or "comprising/including," when used in this specification, specify the presence of stated features, integers, steps, operations, components, and/or parts, but do not preclude the presence or addition of one or more other features, integers, steps, operations, components, and parts, and/or groups thereof.

The terms "first", "second", etc., are used to describe various components and the components should not be limited by the terms. The terms are simply used to distinguish one component from another component.

The terms "~unit", "~module", etc., used herein may refer to a unit configured to process at least one function or operation and may be configured as hardware or software, or combination of hardware and software.

Also, components of an example embodiment described with reference to each drawing may not apply only to the corresponding example embodiment and may be included in other example embodiments within the scope of the disclosure. Also, although a separate description is omitted, it should be understood that a plurality of example embodiments may be configured into a single example embodiment.

Also, describing with reference to the accompanying drawings, like reference numerals refer to like components throughout and thus, further description is omitted. When it is determined that detailed description related to the known art renders the disclosure unnecessarily ambiguous, the detailed description is omitted.

While this disclosure includes specific example embodiments, it will be apparent to one of ordinary skill in the art that various alterations and modifications in form and details may be made in these example embodiments without departing from the scope of the claims. For example, suitable results may be achieved if the described techniques are performed in a different order, and/or if components in a described system, architecture, device, or circuit are combined in a different manner, and/or replaced or supplemented by other components. The scope of the disclosure is defined by the claims.

**Claims**

1. A method of extracting phase information and reconstructing a volumetric image, of a sample (110), the method comprising:

   illuminating the sample with illumination light,
   measuring (S120) an intensity image of the illumination light that passed the sample using an optical signal measurement device; wherein the image is formed without the use of an optical reference beam, and
   extracting (S130) optical phase information of the sample by applying Kramers-Kronig relations to the measured intensity image,
   wherein (SI50) a volumetric image is reconstructed based on the extracted optical phase information.

2. The method of claim 1, further comprising:

   measuring (SI40) a two-dimensional (2D) phase image of the sample at incident angle by scanning an angle of incident light in an azimuthal direction while maintaining an angle between the incident light and an optical axis, wherein a three-dimensional (3D) volumetric image is reconstructed through a plurality of 2D phase images.

3. The method of claim 2, further comprising:
   constructing (S150) a 3D refractive index volumetric image using inverse scattering of the measured 2D phase images.

4. The method of claim 1, wherein a 2D phase image or a 3D refractive index volumetric image of at least one fine sample among microorganisms, cells, tissues, thin films, nano-photonics, optical fibers, microparticles, and fine dust is measured.

5. The method of claim 1, further comprising:
   modulating (S110) an angle of incident light using a high-speed incident angle scanning device capable of quickly modulating an incident angle to measure a 2D phase image of the sample at incident angle.

6. The method of claim 5, wherein the modulating (S110) of the angle of the incident light comprises modulating the angle of the incident light using a diffractive tilting method of modulating an angle of light in a form of diffraction occurring by changing a structure of a reflective surface through a spatial light modulator (SLM).

7. The method according to any of the preceding claims, including extracting (S130) the phase information of the sample using a temporally-coherent or a temporally-incoherent light source as the source of illumination light

8. An apparatus for extracting phase information and reconstructing a volumetric image of a sample (110), the apparatus (1400) comprising:

   a source of light configured to illuminate the sample (110),
   an image measurer (130, 1420) configured to measure an intensity image of light that passed the sample (110) using an optical signal measurement device, without using an optical reference beam; and
   a phase information extractor (1430) configured to extract optical phase information of the sample by applying Kramers-Kronig relations to the measured intensity image,
   wherein a volumetric image of the sample (110) is reconstructed based on the extracted optical phase information

9. The apparatus of claim 8, wherein the image measurer (1420) is further configured to measure a two-dimensional (2D) phase image of the sample at incident angle by scanning an angle of incident light in an azimuthal direction while maintaining an angle between the incident light and an optical axis, and to reconstruct a three-dimensional (3D) volumetric image through a plurality of 2D phase images.

10. The apparatus of claim 9, wherein the image measurer (1420) is further configured to reconstruct a 3D refractive index volumetric image using inverse scattering of the measured 2D phase images.

11. The apparatus of claim 8, further comprising:
    a high-speed incident angle scanning device (1410) configured to modulate an angle of incident light to measure a 2D phase image of the sample at incident angle.

12. The apparatus according to any of claims 8-11, wherein the phase information extractor (1430) is configured to extract optical phase information of the sample by applying Kramers-Kronig relations to the measured intensity image obtained using a temporally-coherent light source or a temporally-incoherent light source as the source of illumination light

**Patentansprüche**

1. Verfahren zum Extrahieren von Phaseninformation und Rekonstruieren eines volumetrischen Bildes einer Probe (110), wobei das Verfahren umfasst:

   Beleuchten der Probe mit Beleuchtungslicht,
   Messen (S120) eines Intensitätsbildes des Beleuchtungslichts, das die Probe passiert hat, unter Verwendung einer optischen Signalmessvorrichtung; wobei das Bild ohne die Verwendung eines optischen Referenzstrahls gebildet wird,
   Extrahieren (S130) der optischen Phaseninformation der Probe durch Anwendung von Kramers-Kronig-Beziehungen auf das gemessene Intensitätsbild,
   wobei (S150) ein volumetrisches Bild basierend auf der extrahierten optischen Phaseninformation rekonstruiert wird.

2. Verfahren nach Anspruch 1, das ferner umfasst:

   Messen (S140) eines zweidimensionalen (2D) Phasenbildes der Probe unter einem Einfallswinkel durch Abtasten eines Winkels des einfallenden Lichts in einer azimutalen Richtung unter Beibehaltung eines Winkels zwischen dem einfallenden Licht und einer optischen Achse,
   wobei ein dreidimensionales (3D) volumetrisches Bild aus mehreren 2D-Phasenbildern rekonstruiert wird.

3. Verfahren nach Anspruch 2, das ferner umfasst:
   Konstruktion (S150) eines volumetrischen 3D-Brechungsindexbildes unter Verwendung der inversen 20 Streuung der gemessenen 2D-Phasenbilder.

4. Verfahren nach Anspruch 1, wobei ein 2D-Phasenbild oder ein volumetrisches 3D-Brechungsindexbild von mindestens einer feinen Probe aus Mikroorganismen, Zellen, Geweben, dünnen Filmen, Nanophotonik, optischen Fasern, Mikropartikeln und Feinstaub gemessen wird.

5. Verfahren nach Anspruch 1, das ferner umfasst:
   Modulation (S110) eines Winkels des einfallenden Lichts unter Verwendung einer Hochgeschwindigkeits-Abtastvorrichtung für einen Einfallswinkel, die in der Lage ist, einen Einfallswinkel schnell zu modulieren, um ein 2D-Phasenbild der Probe unter dem Einfallswinkel zu messen.

6. Verfahren nach Anspruch 5, wobei das Modulieren (S110) des Winkels des einfallenden Lichts das Modulieren des Winkels des einfallenden Lichts unter Verwendung eines diffraktiven Kippverfahrens zum Modulieren eines Lichtwinkels in Form von Beugung umfasst, die durch Ändern einer Struktur einer reflektierenden Oberfläche durch einen räumlichen Lichtmodulator (SLM) auftritt.

7. Verfahren nach einem der vorhergehenden Ansprüche, einschließlich des Extrahierens (S130) der Phaseninformation der Probe unter Verwendung einer zeitlich kohärenten oder einer zeitlich inkohärenten Lichtquelle als Quelle des Beleuchtungslichts.

8. Einrichtung zum Extrahieren von Phaseninformation und zum Rekonstruieren eines volumetrischen Bildes einer Probe (110), wobei die Einrichtung (1400) umfasst:

   eine Lichtquelle, die so ausgelegt ist, dass sie die Probe (110) beleuchtet,
   ein Bildmesser (130, 1420), der so ausgelegt ist, dass es ein Intensitätsbild von Licht, das die Probe (110) passiert hat, unter Verwendung einer optischen Signalmessvorrichtung misst, ohne einen optischen Referenzstrahl zu verwenden; und
   einen Phaseninformationsextraktor (1430), der so ausgelegt ist, dass er optische Phaseninformationen der Probe durch Anwendung von Kramers-Kronig-Beziehungen auf das gemessene Intensitätsbild extrahiert,

wobei ein volumetrisches Bild der Probe (110) basierend auf der extrahierten optischen Phaseninformation rekonstruiert wird.

9. Einrichtung nach Anspruch 8, wobei der Bildmesser (1420) ferner so ausgelegt ist, dass er ein zweidimensionales (2D) Phasenbild der Probe unter einem Einfallswinkel misst, indem es einen Winkel des einfallenden Lichts in einer azimutalen Richtung unter Beibehaltung eines Winkels zwischen dem einfallenden Licht und einer optischen Achse abtastet, und dass er ein dreidimensionales (3D) volumetrisches Bild durch mehrere 2D-Phasenbilder rekonstruiert.

10. Einrichtung nach Anspruch 9, wobei das Bildmesser (1420) ferner so ausgelegt ist, dass es ein volumetrisches 3D-Brechungsindexbild unter Verwendung der inversen Streuung der gemessenen 2D-Phasenbilder rekonstruiert.

11. Einrichtung nach Anspruch 8, die außerdem umfasst:
eine Hochgeschwindigkeits-Einfallswinkel-Abtastvorrichtung (1410), die so ausgelegt ist, dass sie einen Winkel des einfallenden Lichts moduliert, um ein 2D-Phasenbild der Probe unter dem Einfallswinkel zu messen.

12. Einrichtung nach einem der Ansprüche 8 bis 11, wobei der Phaseninformationsextraktor (1430) so ausgelegt ist, dass er optische Phaseninformationen der Probe extrahiert, indem er Kramers-Kronig-Beziehungen auf das gemessene Intensitätsbild anwendet, das unter Verwendung einer zeitlich kohärenten Lichtquelle oder einer zeitlich inkohärenten Lichtquelle als Beleuchtungslichtquelle erhalten wurde.

**Revendications**

1. Procédé d'extraction d'informations de phase et de reconstruction d'une image volumétrique, d'un échantillon (110), le procédé comprenant :

L'illumination de l'échantillon avec une lumière d'illumination,
la mesure (S120) d'une image d'intensité de la lumière d'illumination qui est passée par l'échantillon à l'aide d'un dispositif de mesure de signal optique ; dans lequel l'image est formée sans l'utilisation d'un faisceau de référence optique, et
l'extraction (S130) d'informations de phase optique de l'échantillon par application de relations de Kramers-Kronig à l'image d'intensité mesurée,
dans lequel (S150) une image volumétrique est reconstruite sur la base des informations de phase optique extraites.

2. Procédé selon la revendication 1, comprenant en outre :

la mesure (S140) d'une image de phase bidimensionnelle (2D) de l'échantillon à un angle d'incidence par balayage d'un angle de lumière incidente dans une direction azimutale tout en maintenant un angle entre la lumière incidente et un axe optique,
dans lequel une image volumétrique tridimensionnelle (3D) est reconstruite par le biais d'une pluralité d'images de phase 2D.

3. Procédé selon la revendication 2, comprenant en outre :
la construction (S150) d'une image volumétrique d'indice de réfraction 3D à l'aide d'une diffusion inverse des images de phase 2D mesurées.

4. Procédé de la revendication 1, dans lequel une image de phase 2D ou une image volumétrique d'indice de réfraction 3D d'au moins un échantillon fin parmi des micro-organismes, des cellules, des tissus, des films minces, des éléments nano-photoniques, des fibres optiques, des microparticules et de la poussière fine est mesurée.

5. Procédé selon la revendication 1, comprenant en outre :
la modulation (S110) d'un angle de lumière incidente à l'aide d'un dispositif de balayage d'angle d'incidence à grande vitesse capable de moduler rapidement un angle d'incidence pour mesurer une image de phase 2D de l'échantillon à l'angle d'incidence.

6. Procédé selon la revendication 5, dans lequel la modulation (S110) de l'angle de la lumière incidente comprend la modulation de l'angle de la lumière incidente à l'aide d'un procédé d'inclinaison diffractive consistant à moduler un angle de lumière sous une forme de diffraction se produisant par changement d'une structure d'une surface réfléchissante par le biais d'un modulateur de lumière spatial (SLM).

7. Procédé selon l'une quelconque des revendications précédentes, comportant L'extraction (S130) des informations de phase de l'échantillon à l'aide d'une source de lumière temporellement cohérente ou temporellement incohérente en tant que source de lumière d'illumination.

8. Appareil pour extraire des informations de phase et reconstruire une image volumétrique d'un échantillon (110), l'appareil (1400) comprenant :

   une source de lumière configurée pour illuminer l'échantillon (110),
   un mesureur d'image (130, 1420) configuré pour mesurer une image d'intensité de la lumière qui est passée par l'échantillon (110) à l'aide d'un dispositif de mesure de signal optique, sans utiliser un faisceau de référence optique ; et
   un extracteur d'informations de phase (1430) configuré pour extraire des informations de phase optique de l'échantillon par application de relations de Kramers-Kronig à l'image d'intensité mesurée,
   dans lequel une image volumétrique de l'échantillon (110) est reconstruite sur la base des informations de phase optique extraites.

9. Appareil selon la revendication 8, dans lequel le mesureur d'image (1420) est en outre configuré pour mesurer une image de phase bidimensionnelle (2D) de l'échantillon à un angle d'incidence par balayage d'un angle de lumière incidente dans une direction azimutale tout en maintenant un angle entre la lumière incidente et un axe optique, et pour reconstruire une image volumétrique tridimensionnelle (3D) par le biais d'une pluralité d'images de phase 2D.

10. Appareil selon la revendication 9, dans lequel le mesureur d'image (1420) est en outre configuré pour reconstruire une image volumétrique d'indice de réfraction 3D à l'aide d'une diffusion inverse des images de phase 2D mesurées.

11. Dispositif de la revendication 8, comprenant en outre :
    un dispositif de balayage d'angle d'incidence à grande vitesse (1410) configuré pour moduler un angle de lumière incidente afin de mesurer une image de phase 2D de l'échantillon à l'angle d'incidence.

12. Appareil selon l'une quelconque des revendications 8 à 11, dans lequel l'extracteur d'informations de phase (1430) est configuré pour extraire des informations de phase optique de l'échantillon par application de relations de Kramers-Kronig à l'image d'intensité mesurée obtenue à l'aide d'une source de lumière temporellement cohérente ou d'une source de lumière temporellement incohérente en tant que source de lumière d'illumination.

# FIG. 1A

# FIG. 1B

log(1)/2

0          (a.u.)          1

Phase

−0.55      (red)      0.55

Space-domain
kramers–Kronig relations

$x = \log[E(r)e^{-ik_{inc}\cdot r}]$

Re(%)
Im(%)

position

# FIG. 2

240

# FIG. 3A

# FIG. 3B

330

304

305

306

307

308

309

311

340

## FIG. 4A

**FIG. 4B**

# FIG. 4C

# FIG. 4D

420

430

440

# FIG. 5

# FIG. 6

FIG. 7A (RELATED ART)

# FIG. 7B

# FIG. 8

# FIG. 9A

# FIG. 9B

# FIG. 10

# FIG. 11

Desired 8-bit
fSLM pattern

$P_{fSLM}^{8bit}$

8-bit
DMD pattern

$P_{DMD}^{8bit}$

$$P_{fSLM}^{8bit} = \frac{1}{2}\left(P_{fSLM}^{8bit} + 1\right)$$

See reference:
10-1888924-0000

| $P_{DMD}^{(7)}$ | $P_{DMD}^{(6)}$ | $P_{DMD}^{(5)}$ | $P_{DMD}^{(4)}$ |
|---|---|---|---|
| $P_{DMD}^{(3)}$ | $P_{DMD}^{(2)}$ | $P_{DMD}^{(1)}$ | $P_{DMD}^{(9)}$ |

$$P_{fSLM}^{(n)} = 2P_{DMD}^{(n)} - 1$$

| $P_{fSLM}^{(7)}$ | $P_{fSLM}^{(6)}$ | $P_{fSLM}^{(5)}$ | $P_{fSLM}^{(4)}$ |
|---|---|---|---|
| $P_{fSLM}^{(3)}$ | $P_{fSLM}^{(2)}$ | $P_{fSLM}^{(1)}$ | $P_{fSLM}^{(9)}$ |

# FIG. 12

# FIG. 13

# FIG. 14

1400

```
┌─────────────────────────────────────────┐
│                                           │
│   ┌─────────────────────────┐             │
│   │   High-speed incident    │ ~── 1410   │
│   │  angle scanning device   │            │
│   └─────────────────────────┘             │
│                                           │
│   ┌─────────────────────────┐             │
│   │      Image measurer      │ ~── 1420   │
│   └─────────────────────────┘             │
│                                           │
│   ┌─────────────────────────┐             │
│   │ Phase information extractor │ ~── 1430 │
│   └─────────────────────────┘             │
│                                           │
└─────────────────────────────────────────┘
```

# FIG. 15

```
          ┌─────────────┐
          │    Start     │
          └─────────────┘
                 │
                 ▼
┌────────────────────────────────────────────┐
│ Modulating an angle of incident light using a high-speed │        S110
│         incident angle scanning device          │
└────────────────────────────────────────────┘
                 │
                 ▼
┌────────────────────────────────────────────┐
│  Measure intensity image of light that passes sample  │        S120
│      using optical signal measurement device      │
└────────────────────────────────────────────┘
                 │
                 ▼
┌────────────────────────────────────────────┐
│   Extract optical phase information of sample by applying   │        S130
│   Kramers-Kronig relations to measured intensity image   │
└────────────────────────────────────────────┘
                 │
                 ▼
┌────────────────────────────────────────────┐
│  Measure 2D phase image of sample at various incident  │        S140
│  angles by scanning angle of incident light in azimuthal  │
│  direction while maintaining angle between incident light  │
│              and optical axis              │
└────────────────────────────────────────────┘
                 │
                 ▼
┌────────────────────────────────────────────┐
│  Reconstruct 3D refractive index volumetric image using  │        S150
│     inverse scattering of measured 2D phase images     │
└────────────────────────────────────────────┘
                 │
                 ▼
          ┌─────────────┐
          │     End      │
          └─────────────┘
```

## FIG. 16

# FIG. 17

a  Experiment

b  Simulation

1.5745   RI   1.582

# FIG. 18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 101888924

**Non-patent literature cited in the description**

- **YOONSEOK BAEK et al.** Kramers-Kronig holographic imaging for high-space-bandwidh product. *Optica,* January 2019, vol. 6 (1